**Europäisches Patentamt**

**European Patent Office**

**Office européen des brevets**

(11) Veröffentlichungsnummer: **0 443 102 A1**

## (12) EUROPÄISCHE PATENTANMELDUNG

(21) Anmeldenummer: **90121751.3**

(22) Anmeldetag: **14.11.90**

(51) Int. Cl.⁵: **B23B 31/00**

(30) Priorität: **22.02.90 DE 4005581**

(43) Veröffentlichungstag der Anmeldung:
**28.08.91 Patentblatt 91/35**

(84) Benannte Vertragsstaaten:
**AT BE CH DE ES FR GB IT LI LU NL SE**

(71) Anmelder: **WALTER AG**
**Derendinger Strasse 53**
**W-7400 Tübingen(DE)**

(72) Erfinder: **Held, Paul**
**Fliederweg 1**
**W-7419 Sonnenbühl-Willmandingen(DE)**

(74) Vertreter: **Rüger, Rudolf, Dr.-Ing. et al**
**Webergasse 3 Postfach 348**
**W-7300 Esslingen/Neckar(DE)**

(54) **Aufnahmedorn mit Spindelanlage für Werkzeuge.**

(57) Ein Aufnahmedorn mit Spindelanlage zur Aufnahme von Werkzeugen, insbesondere im Spindelkopf der Arbeitsspindeln von Werkzeugmaschinen, weist einen zur Verbindung mit einem Werkzeug eingerichteten Werkzeug-Aufnahmekörper (1) auf, der einen Spannschaft (6) trägt. An dem Werkzeug-Aufnahmekörper ist eine rechtwinklig zu der Achse des Spannschaftes verlaufende Anlagefläche (11) für eine zugeordnete Stirnfläche des Spindelkopfes ausgebildet. Außerdem ist auf einer der Anlagefläche benachbarten zylindrischen Fläche (9) des Spannschaftes eine Kegelhülse (16) axial verstellbar gelagert, die einen der zugeordneten Kegelbohrung (23) des Spindelkopfes entsprechenden Kegelwinkel aufweist. Der Spannschaft ist anschließend an die zylindrische Fläche (9) mit einem Gewinde (12) versehen, auf das die zumindest an der zylindrischen Fläche zentrierte Kegelhülse (16) mittels eines entsprechenden Innengewindes (17) axial einstellbar aufgeschraubt ist.

EP 0 443 102 A1

Die Erfindung betrifft einen Aufnahmedorn mit Spindelanlage zur Aufnahme von Werkzeugen, insbesondere im Spindelkopf der Arbeitsspindeln von Werkzeugmaschinen, mit einem einen Spannschaft tragenden und zur Verbindung mit einem Werkzeug eingerichteten Werkzeug-Aufnahmekörper, an dem eine rechtwinklig zu der Achse des Spannschaftes verlaufende Anlagefläche für eine zugeordnete Stirnfläche des Spindelkopfes ausgebildet ist, wobei auf einer der Anlagefläche benachbarten zylindrischen Fläche des Spannschaftes eine Kegelhülse axial verstellbar gelagert ist, die einen der zugeordneten Kegelbohrung des Spindelkopfes entsprechenden Kegelwinkel aufweist.

Beispielsweise bei der Fräs- und Bohrbearbeitung von metallischen Werkstücken treten bei schweren Schnitten große Radialkräfte auf, die als Biegekräfte auf den Werkzeug-Aufnahmedorn und die Arbeitsspindel wirken, in deren Spindelkopf der Aufnahmedorn mit seinem Spannschaft eingesetzt ist. Ist der Spindelkopf mit Steilkegel nach DIN 2079 in der üblichen Weise ausgebildet, so ist das Werkzeug über den entsprechend steilkegeligen Spannschaft lediglich in der Steilkegelbohrung des Spindelkopfes aufgenommen. Damit ist aber die Schnittstelle Spindelkopf/ Aufnahmedorn verhältnismäßig biegeweich, mit dem Ergebnis, daß im Einsatz an dem Werkzeug angreifende Radialkräfte zu einer bei höheren Genauigkeitsanforderungen unzulässigen elastischen Biegeverformung des Spannschaftes führen, die entsprechende Lageabweichungen des Werkzeuges und dessen Schneiden ergibt.

Es ist an sich bekannt, daß sich eine wesentliche Erhöhung der Steifigkeit der Schnittstelle Spindelkopf/ Aufnahmedorn dadurch erzielen läßt, daß dem steilkegeligen Spannschaft eine rechtwinklig zu dessen Achse verlaufende, in der Regel an einem Ringflansch ausgebildete Anlagefläche zugeordnet wird, die bei in die Steilkegelbohrung des Spindelkopfes eingesetztem Spannschaft an der zugewandten Stirnfläche des Spindelkopfes anliegt. Bei einem derart gestalteten Aufnahmedorn mit sogenannter Spindelanlage werden die bei schweren Schnitten auftretenden Biegekräfte zwar wesentlich besser aufgenommen, doch muß zur Gewährleistung einer exakten Zentrierung des Spannschaftes in der Steilkegelbohrung des Spindelkopfes sichergestellt sein, daß trotz der Spindelanlage die einander zugeordneten Kegelflächen des Spannschaftes und der Steilkegelbohrung im Spindelkopf absolut spielfrei aufeinander abgestützt sind. Da aber aus Herstellungsgründen bei den gebräuchlichen, nach DIN 2079 genormten Spindelköpfen zwischen der Ebene maximalen Durchmessers der Steilkegelbohrung und der die Plananlage bildenden Stirnfläche des Spindelkopfes verhältnismäßig grobe Toleranzen zulässig sind, besteht keine Gewähr dafür, daß bei in den Spindelkopf eingesetztem Aufnahmedorn einerseits eine einwandfreie Spindelanlage an der Planaufnahme und andererseits gleichzeitig eine einwandfreie Zentrierung über die Steilkegelaufnahme gewährleistet ist.

Um hier abzuhelfen, sind schon eine ganze Reihe von Vorschlägen bekannt geworden, die im Grunde alle darauf hinauslaufen, zwischen dem Spindelkopf und dem mit Spindelanlage ausgebildeten Aufnahmedorn elastisch verformbare Elemente vorzusehen, die beim Festziehen des in dem Spindelkopf aufgenommenen Spannschaftes etwa vorhandene Herstellungstoleranzen durch entsprechende elastische Verformung ansgleichen und damit eine sichere Plananlage und Aufnahme an bzw. in dem Spindelkopf gewährleisten. Ein Beispiel für diesen Stand der Technik ist in der DE-OS 1900 080 (US-PS 3554 080), von der die Erfindung ausgeht, beschrieben.

Bei dem bekannten Fräsdorn zur Zentrierung und Befestigung von Fräswerkzeugen in den Spindeln von Werkzeugmaschinen ist die Anordnung derart getroffen, daß bei dem einen Spannschaft und einen eine plane Anlagefläche für die Spindelanlage tragenden Flansch aufweisenden Werkzeug-Aufnahmekörper der Spannschaft mit einer zylindrischen Partie versehen ist, auf der eine konische Hülse, d.h. eine Kegelhülse, axial beweglich gelagert ist. Diese Kegelhülse, deren Längsbeweglichkeit durch Anschlagmittel begrenzt ist und deren zylindrische Bohrung, ebenso wie die zugehörige zylindrische Führungsfläche des Spannschaftes geläppt ist, stützt sich in Axialrichtung gegen den Ringflansch über einen in eine Ringnut des Ringflansches eingelegten elastischen Ring ab. Bei in den Spindelkopf eingesetztem Fräsdorn liegt der Ringflansch mit seiner Anlagefläche an der zugeordneten planen Stirnfläche des Spindelkopfes an, während der unter axialer Vorspannung stehende elastische Ring die Kegelhülse in Axialrichtung in den Ringspalt zwischen der zylindrischen Fläche des Spannschaftes und der diesen umgebenden Kegelfläche der Kegelbohrung des Spindelkopfes preßt.

Die Verwendung elastischer Elemente an der Schnittstelle Spindelkopf/Aufnahmedorn oder Werkzeug ergibt aber bei hohen, insbesondere auch dynamischen Belastungen bei vielen Anwendungsfällen keine ausreichend stabile Aufnahme des Aufnahmedorns und damit des Werkzeugs im Spindelkopf.

Aufgabe der Erfindung ist es deshalb, einen Aufnahmedorn mit Spindelanlage zu schaffen, der es erlaubt, bei Verwendung mit einem üblichen genormten Spindelkopf eine einwandfreie Plananlage am Spindelkopf und einen exakten Sitz in der Steilkegelbohrung des Spindelkopfes gleichzeitig zu gewährleisten und damit eine stabile Verbindung zwischen der Arbeitsspindel und dem Aufnahmedorn sicherzustellen.

Zur Lösung dieser Aufgabe ist der eingangs genannte Aufnahmedorn erfindungsgemäß dadurch gekennzeichnet, daß der Spannschaft anschließend an die zylindrische Fläche ein Gewinde aufweist, auf das die zumindest an der zylindrischen Fläche zentrierte Kegelhülse mittels eines entsprechenden Innengewindes axial einstellbar aufgeschraubt ist.

Um die Führung der Kegelhülse auf den Spannschaft erforderlichenfalls noch zu verbessern, kann die Kegelhülse auch auf beidseitig des Gewindes angeordneten zylindrischen Flächen des Spannschaftes zentriert sein. Zweckmäßigerweise weist die Kegelhülse lösbare Feststellmittel auf, durch die sie in ihrer jeweiligen Einstellung drehfest bezüglich des Spannschaftes verriegelbar ist. Diese Feststellmittel können in verschiedener Weise zweckentsprechend ausgeführt sein. In einer bevorzugten Ausführungsform weisen sie wenigstens eine in eine entsprechende radiale Gewindebohrung der Kegelhülse eingeschraubte Klemmschraube auf, die auf eine zylindrische Fläche des Spannschaftes sich abstützend ausgebildet sein kann.

Das Gewinde erlaubt es, die Kegelhülse auf dem Spannschaft entsprechend den Gegebenheiten der jeweiligen Arbeitsspindel so einzustellen, daß beim Festziehen des in den Spindelkopf eingesetzten Spannschaftes eine exakte starre Plananlage und ein präziser Sitz in der Steilkegelbohrung gewährleistet sind.

Der Einstellvorgang selbst ist sehr einfach: In der Regel wird die Kegelhülse in einem solchen Abstand zu der Anlagefläche des Werkzeug-Aufnahmedorns eingestellt - und sodann drehfest fixiert - daß bei in den Spindelkopf eingesetztem Aufnahmedorn im losen Zustand zunächst ein Spalt von wenigen 1/100 mm zwischen der Spindelkopfplanfläche und der Anlagefläche des Aufnahmedorns vorhanden ist. Beim Festziehen des Aufnahmedorns wird dieser Spalt geschlossen, womit eine stabile starre Verbindung zwischen dem Aufnahmedorn und der Arbeitsspindel gewährleistet ist.

Der neue Aufnahmedorn ist nicht nur zur Aufnahme im Spindelkopf der Arbeitsspindel einer Werkzeugmaschine, bspw. einer Bohr- oder Fräsmaschine, bestimmt, sondern er kann auch in entsprechend gestaltete Aufnahmen anderer Aufnahmeelemente eingesetzt werden. Ein Beispiel für ein solches Aufnahmeelement ist die Werkzeugscheibe eines Werkzeugrevolvers einer Drehmaschine, die mit entsprechenden kegeligen Aufnahmebohrungen ausgerüstet ist. Auch ist die Erfindung nicht auf Werkzeugdorne beschränkt, die zur lösbaren Aufnahme von Werkzeugen (gegebenenfalls über Werkzeugaufnahmeteile) eingerichtet sind. Sie ist auch für solche Fälle anwendbar, bei denen der Aufnahmedorn und der Werkzeugkörper einstückig miteinander verbunden sind.

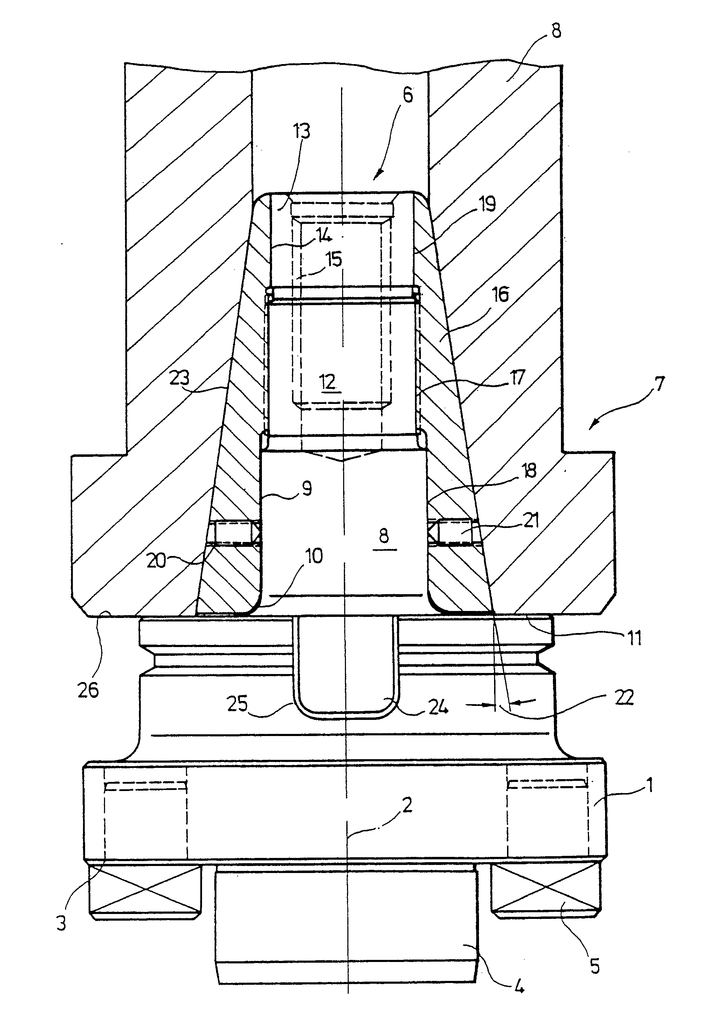

In der Zeichnung ist ein Ausführungsbeispiel des Gegenstandes der Erfindung dargestellt. Die Figur zeigt einen Aufnahmedorn gemäß der Erfindung, eingesetzt in den Spindelkopf einer Arbeitsspindel, in einer Seitenansicht, unter Veranschaulichung der Kegelhülse und der Arbeitsspindel im axialen Schnitt.

Der Aufnahmedorn weist einen im wesentlichen zylindrischen Werkzeug-Aufnahmekörper 1 auf, der auf einer Seite eine rechtwinklig zu seiner Achse 2 verlaufende Planfläche 3 trägt, in deren Bereich ein koaxialer Zentrierzapfen 4 und diesen umgebend Mitnehmer 5 angeordnet sind. Der zylindrische Zentrierzapfen 4 und die Mitnehmer 5 dienen zur Kupplung des Aufnahmedorns mit einem Werkzeugkörper oder einem Werkzeugträgerteil, wie dies an sich bekannt ist (vergl. bspw. DE-OS 19 00 080).

Koaxial zu dem Zentrierzapfen 4 ist auf der gegenüberliegenden Seite des Werkzeug-Aufnahmekörpers 1 ein Spannschaft 6 angeformt, mit dem der Werkzeug-Aufnahmekörper in dem Spindelkopf 7 einer bei 8 angedeuteten Arbeitsspindel einer Werkzeugmaschine aufgenommen ist. Der Spannschaft 7 weist ein erstes zylindrisches Teil 8 auf, das eine eng tolerierte erste zylindrische Führungsfläche 9 trägt und das sich über eine Ausrundung 10 an eine rechtwinkling zu der Achse 2 verlaufende plane Anlagefläche 11 des Werkzeug-Aufnahmekörpers 1 anschließt, die das zylindrische Teil 8 umgibt.

In Achsrichtung auf das erste zylindrische Teil 8 folgend ist der Spannschaft 6 mit einem ein Außengewinde tragenden Gewindeteil 12 kleineren Durchmessers ausgebildet, an das sich in Achsrichtung ein zweites zylindrisches Teil 13 anschließt, dessen zweite zylindrische Führungsfläche 14 ebenfalls eng toleriert ist und einen kleineren Durchmesser als das Gewindeteil 12 aufweist. Eine in dem Spannschaft 6 vorgesehene, bis in das Gewindeteil 12 reichende axiale Gewindebohrung 15 dient zur Verbindung mit einem eine axiale Anzugskraft ausübenden Anzugselement, bspw. in Gestalt einer Anzugsstange, das durch die hohl ausgebildete Arbeitsspindel 8 verläuft, wie dies an sich bekannt ist.

Auf das Gewindeteil 12 des Spannschaftes 6 ist eine Kegelhülse 16 aufgeschraubt, die ein entsprechendes Innengewinde 17 trägt und beidseitig des Innengewindes mit zwei zylindrischen Führungsflächen 18,19 ausgebildet ist, mit denen die Kegelhülse 16 auf der ersten und der zweiten zylindrischen Führungsfläche 9 bzw. 14 beidseitig des Gewindeteils 12 eng toleriert geführt ist.

Im Bereiche des ersten Zylinderteils 8 ist die Kegelhülse 16 mit drei symmetrisch verteilten, durchgehenden, radialen Gewindebohrungen 20 versehen, in die entsprechende Klemmschrauben 21 eingesetzt sind, die sich auf der zylindrischen Fläche 9 abstützen und es erlauben, die Kegelhülse 16 in ihrer jeweils eingestellten Stellung drehfest zu verriegeln.

Der Kegelwinkel 22 des Außenkegels der Kegelhülse 16 entspricht dem Kegelwinkel der Steilkegelbohrung 23 des Spindelkopfes 7, der nach DIN 2079 genormt sein kann.

Ein an der Arbeitsspindel 8 angeordneter, bei 24 angedeuteter Mitnehmer, der in eine entsprechende Nut 25 an dem Werkzeug-Aufnahmekörper 1 eingreift, sichert bei in den Spindelkopf 7 eingesetztem Spannschaft 6 eine drehfeste Verriegelung zwischen diesen beiden Teilen.

Vor der erstmaligen Montage wird die Kegelhülse 16 des Spannschaftes in ihrem axialen Abstand von der Anlagefläche 11 entsprechend den jeweiligen Toleranzen der Planfläche 26 des Spindelkopfes 7 eingestellt und sodann mittels der Klemmschrauben 21 drehfest fixiert. Die Einstellung der Kegelhülse 16 ist dabei derart vorgenommen, daß nach dem Einfügen des Spannschaftes 6 in den Spindelkopf 7 im losen Zustand, d.h. vor dem Festziehen des Spannschaftes, ein kleiner Spalt in der Größenordnung von wenigen 1/100 mm zwischen der Anlagefläche 11 des Werkzeug-Aufnahmekörpers 1 und der Planfläche 26 des Spindelkopfes 7 vorhanden ist. Beim Festziehen des Spannschaftes 6 wird dieser Spalt sodann geschlossen, womit sichergestellt ist, daß einerseits eine exakte Anlage der Anlagefläche 11 an der zugeordneten Planfläche 26 des Spindelkopfes 7 und andererseits ein exakter Sitz des Spannschaftes 6 in der steilkegeligen Aufnahmebohrung 23 des Spindelkopfes 7 gegeben sind.

## Patentansprüche

1. Aufnahmedorn mit Spindelanlage zur Aufnahme von Werkzeugen, insbesondere im Spindelkopf der Arbeitsspindeln von Werkzeugmaschinen, mit einem einen Spannschaft tragenden und zur Verbindung mit einem Werkzeug eingerichteten Werkzeug-Aufnahmekörper, an dem eine rechtwinklig zu der Achse des Spannschaftes verlaufende Anlagefläche für eine zugeordnete Stirnfläche des Spindelkopfes ausgebildet ist, wobei auf einer der Anlagefläche benachbarten zylindrischen Fläche des Spannschaftes eine Kegelhülse axial verstellbar gelagert ist, die einen der zugeordneten Kegelbohrung des Spindelkopfes entsprechenden Kegelwinkel aufweist, dadurch gekennzeichnet, daß der Spannschaft (6) anschließend an die zylindrische Fläche (9) ein Gewinde (12) aufweist, auf das die zumindest an der zylindrischen Fläche (9) zentrierte Kegelhülse (16) mittels eines entsprechenden Innengewindes (17) axial einstellbar aufgeschraubt ist.

2. Aufnahmedorn nach Anspruch 1, dadurch gekennzeichnet, daß die Kegelhülse (16) auf beidseitig des Gewindes (12) angeordneten zylindrischen Flächen (9,14) des Spannschaftes (6) zentriert ist.

3. Aufnahmedorn nach Anspruch 1 oder 2, dadurch gekennzeichnet, daß die Kegelhülse (16) lösbare Feststellmittel (21) aufweist, durch die sie drehfest bezüglich des Spannschaftes (6) verriegelbar ist.

4. Aufnahmedorn nach Anspruch 3, dadurch gekennzeichnet, daß die Feststellmittel wenigstens eine in eine entsprechende radiale Gewindebohrung (20) der Kegelhülse (16) eingeschraubte Klemmschraube (21) aufweisen.

5. Aufnahmedorn nach Anspruch 4, dadurch gekennzeichnet, daß die Klemmschraube (21) auf eine zylindrische Fläche (9) des Spannschaftes (6) sich abstützend ausgebildet ist.

EP 0 443 102 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 436 733 (WOZAR)<br>* Anspruch 1; Figur 1 *<br>— — — | 1 | B 23 B 31/00 |
| A | EP-A-0 316 826 (BENZ)<br>* Spalte 5, Zeile 50 - Spalte 6, Zeile 17; Figur 3 *<br>— — — | 1 | |
| A | US-A-3 242 819 (C.F. ERIKSON)<br>— — — — — | | |

| | | | RECHERCHIERTE SACHGEBIETE (Int. Cl.5) |
|---|---|---|---|
| | | | B 23 B |

Der vorliegende Recherchenbericht wurde für alle Patentansprüche erstellt

| Recherchenort | Abschlußdatum der Recherche | Prüfer |
|---|---|---|
| Den Haag | 31 Mai 91 | RAMBAUD P.M.J. |